# EUROPEAN PATENT SPECIFICATION

(11) **EP 3 702 137 B1**
(45) Date of publication and mention of the grant of the patent: **15.05.2024**
(21) Application number: 18871097.4
(22) Date of filing: 12.10.2018
(51) Int. Cl.: B32B 37/12

(54) **LAMINATION DEVICE AND LAMINATION METHOD**
LAMINIERUNGSVORRICHTUNG UND LAMINIERUNGSVERFAHREN
DISPOSITIF DE STRATIFICATION ET MÉTHODE DE STRATIFICATION

(30) Priority: 24.10.2017 JP 2017205260
(43) Date of publication of application: 02.09.2020
(73) Proprietor: DIC Corporation, Tokyo 174-8520 (JP)
(72) Inventor: TAKAHASHI, Shigekazu, Tokyo 174-8520 (JP); TAKADA, Choichi, Tokyo 103-8233 (JP); MIURA, Hidenobu, Aki-gun Hiroshima 735-0029 (JP); MATSUNAGA, Shinichi, Aki-gun Hiroshima 735-0029 (JP)
(74) Representative: Kraus & Lederer PartGmbB
(86) International application number: PCT/JP2018/038022
(87) International publication number: WO 2019/082683

(56) References cited:
- WO-A1-2015/072205
- CN-A- 106 903 969
- JP-A- S58 189 059
- JP-A- 2014 043 099
- JP-U- S6 175 870
- US-A- 4 342 613
- US-A1- 2015 020 949

## Description

### Technical Field

The present invention relates to a lamination apparatus and a lamination method.

### Background Art

A lamination apparatus for manufacturing a composite film by applying an adhesive to webs and bonding the webs together has been developed. For example, a lamination apparatus disclosed in PTL 1 manufactures a composite film by applying a two-component curable adhesive to one web using a roll coater and bonding the one web and the other web together. In PTL 2, a method for producing an optical film comprises a multilayer structure wherein at least a first film and a second film are bonded with each other with an adhesive layer or bonding agent layer being interposed therebetween, said adhesive layer or bonding agent layer being composed of a layer of a cured product of an adhesive composition or bonding agent composition. This method for producing an optical film comprises a coating step wherein foreign materials and/or air bubbles are removed by applying the adhesive composition or bonding agent composition to both the bonding surface of the first film and the bonding surface of the second film using a post-measurement coating method. I

### Citation List

### Patent Literature

PTL 1: Japanese Unexamined Patent Application Publication No. 58-122074 11
PTL 2:
   WO 2015/072205 A1

### Summary of Invention

### Technical Problem

In the lamination apparatus disclosed in PTL 1, a mixture of a main agent and a curing agent of the two-component curable adhesive is stored in a reservoir. The stored adhesive mixture is applied to a web by using a roll coater. There is thus a need to slow down the curing of the adhesive mixture stored in the reservoir of such a lamination apparatus in order to increase the pot life of the adhesive mixture. If the adhesive mixture is cured slowly, it takes time for the adhesive to cure sufficiently after the webs are bonded together. This may cause positional deviation after bonding.

If a coating liquid, such as an adhesive mixture, has low viscosity, liquid sagging occurs in application with a roll coater, which degrades coating quality.

The present invention has been accomplished in view of the above circumstances. An object of the present invention is to provide a lamination apparatus and a lamination method in which a fast-curing adhesive can be used and which can improve the quality of a composite film and enables application of a low-viscosity coating liquid.

### Solution to Problem

To achieve the above object, a lamination apparatus according to a first aspect of the present invention is as defined in claim 1.

The coating weight ratio of the coating liquid applied by the first coating unit to the coating liquid applied by the second coating unit may be in the range of 1:1 to 10:1.

The second coating unit may include:
a coating liquid tank that stores the coating liquid; and
a temperature controller that controls the temperature of the coating liquid stored in the coating liquid tank.

The second coating unit may
apply the coating liquid in such a manner that the coating amount of the coating liquid in a central section in the coating width direction is larger than the coating amount of the coating liquid in both end sections in the coating width direction.

The gravure coating machine being the second coating unit may include:
a gravure roll that transfers the coating liquid and that can be rotated in the same direction as the transport direction of the second web.

A lamination method according to a second aspect of the present invention is as defined in claim 7.

The coating weight ratio of the coating liquid applied in the first application step to the coating liquid applied in the second application step may be in the range of 1:1 to 10:1.

The coating liquid applied in the second application step may have a viscosity of
10 mPa·S or more and 500 mPa·S or less.

The second application step may
involve applying the coating liquid to the second web by rotating a gravure roll in the same direction as the transport direction of the second web.

### Advantageous Effects of Invention

In the lamination apparatus and the lamination method according to the present invention, a main agent and a curing agent are applied to different webs, and an adhesive starts to cure when the webs are bonded together. This feature enables use of a fast-curing adhesive and can suppress positional deviation after bonding to improve the quality of a composite film. Furthermore, application of one coating liquid selected from the main agent and the curing agent through gravure printing can prevent liquid sagging and improve coating quality.

### Brief Description of Drawings

[Fig. 1] Fig. 1 is a front view of a lamination apparatus according to an embodiment.
[Fig. 2] Fig. 2 is a front view of the configuration of main parts of a first coating unit.
[Fig. 3] Fig. 3 is a front view of the configuration of main parts of a second coating unit.
[Fig. 4] Fig. 4 is a cross-sectional view of a first web and a second web before bonding according to an embodiment.
[Fig. 5] Fig. 5 is a cross-sectional view of the first web and the second web after bonding according to the embodiment.
[Fig. 6] Fig. 6 is a cross-sectional view of an example of the first web and the second web before bonding.
[Fig. 7] Fig. 7 is a cross-sectional view of an example of the first web and the second web after bonding.
[Fig. 8] Fig. 8 shows graphs of examples of the coating amount at a line speed of 80 m/min, where Fig. 8(A) is a graph showing the coating amount for the forward rotation of the gravure roll, and Fig. 8(B) is a graph showing the coating amount for the reverse rotation of the gravure roll.
[Fig. 9] Fig. 9 shows graphs of examples of the coating amount at a line speed of 100 m/min, where Fig. 9(A) is a graph showing the coating amount for the forward rotation of the gravure roll, and Fig. 9(B) is a graph showing the coating amount for the reverse rotation of the gravure roll. Description of Embodiments

A lamination apparatus according to an embodiment of the present invention will be described below with reference to the drawings.

A lamination apparatus 1 according to this embodiment is an apparatus that bonds a first web W1 and a second web W2 together by using a two-component curable solvent-free adhesive as a two-component curable adhesive. The two-component curable solvent-free adhesive according to this embodiment includes a main agent M and a curing agent H. The main agent M has a higher viscosity than the curing agent H.

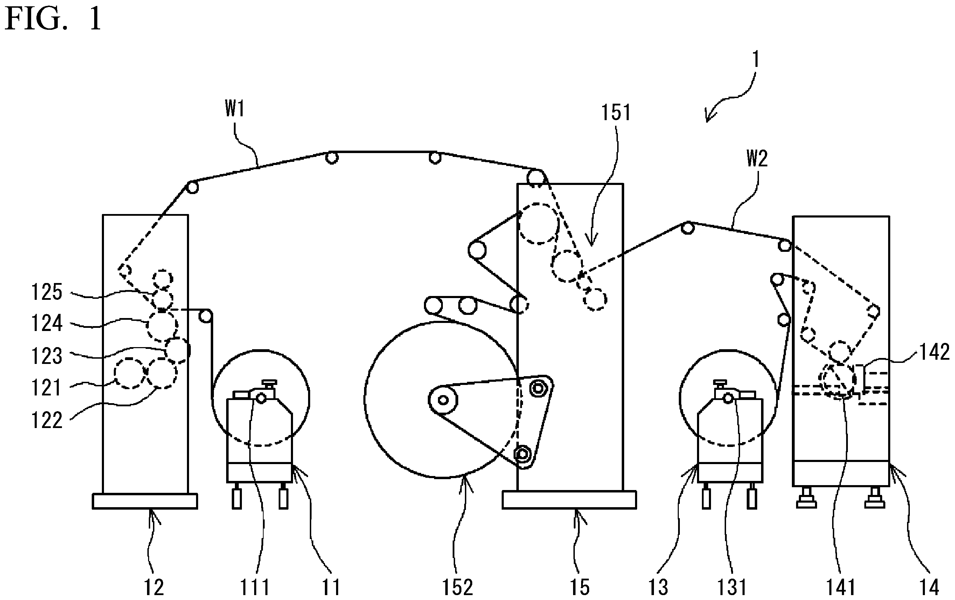

As illustrated in Fig. 1, the lamination apparatus 1 includes a first unwinding unit 11, a first coating unit 12, a second unwinding unit 13, a second coating unit 14, and a laminator 15.

The first unwinding unit 11 sends the first web W1 to the first coating unit 12. The first web W1 is rotatably attached to a web attachment section 111 of the first unwinding unit 11.

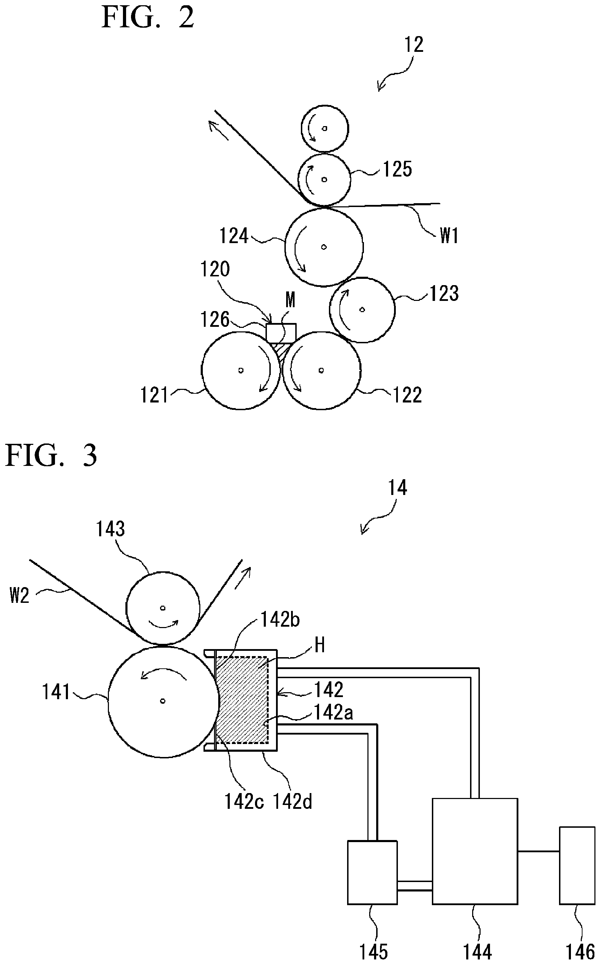

The first coating unit 12 applies, as a coating liquid, a main agent M of the two-component curable solvent-free adhesive to the first web W1 sent from the first unwinding unit 11. As illustrated in Fig. 2, the first coating unit 12 according to this embodiment is a four-squeeze-roll type roll coater and includes an application roll 121, a doctor roll 122, a metering roll 123, a coating roll 124, and a backing roll 125. A reservoir 120 is disposed in an opposing section in which the application roll 121 opposes the doctor roll 122.

The application roll 121 has an outer circumferential surface made of elastic material, such as rubber. The doctor roll 122 has an outer circumferential surface made of metal (inelastic material). The application roll 121 and the doctor roll 122 are rotatably supported by the first coating unit 12 such that the rotation axis of the application roll 121 is parallel to that of the doctor roll 122. The outer circumferential surface of the application roll 121 opposes the outer circumferential surface of the doctor roll 122 with a fine gap therebetween.

Two weir plates 126 are disposed in an upper part of the opposing section and arranged at a predetermined interval in the direction of the rotation axis of the application roll 121 and the doctor roll 122. The reservoir 120 is defined by the two weir plates 126, the outer circumferential surface of the application roll 121, and the outer circumferential surface of the doctor roll 122.

The reservoir 120 temporarily stores the main agent M. The main agent M is supplied to the reservoir 120 from a main agent supply unit (not shown). With this configuration, the amount of the main agent M stored in the reservoir 120 is maintained at a constant level.

The doctor roll 122 has a temperature controller (not shown) in order to maintain the main agent M stored in the reservoir 120 at a constant temperature and stabilize the viscosity of the main agent M. With this configuration, the outer circumferential surface of the doctor roll 122 is maintained at a constant temperature.

As illustrated in Fig. 2, the downward rotation of the application roll 121 and the doctor roll 122 in the reservoir 120 causes the main agent M that has passed through the fine gap to be applied to the outer circumferential surface of the doctor roll 122.

The first coating unit 12 rotatably supports the metering roll 123, the coating roll 124, and the backing roll 125.

The metering roll 123 transfers the main agent M applied to the outer circumferential surface of the doctor roll 122 and is disposed such that the rotation axis of the metering roll 123 is parallel to the rotation axis of the doctor roll 122. The outer circumferential surface of the metering roll 123 is made of elastic material, such as rubber, and pressed against the outer circumferential surface of the doctor roll 122.

The coating roll 124 transfers the main agent M applied to the outer circumferential surface of the metering roll 123 and is disposed such that the rotation axis of the coating roll 124 is parallel to the rotation axis of the metering roll 123. The outer circumferential surface of the coating roll 124 is made of metal material and pressed against the outer circumferential surface of the metering roll 123.

The backing roll 125 is disposed such that the rotation axis of the backing roll 125 is parallel to the rotation axis of the coating roll 124. The backing roll 125 holds the first web W1 together with the coating roll 124 and transports the first web W1. The backing roll 125 assists the transfer of the main agent M on the outer circumferential surface of the coating roll 124 to the first web W1. The backing roll 125 has an outer circumferential surface made of elastic material, such as rubber.

In this embodiment, the outer circumferential surface of the coating roll 124 is maintained at a constant temperature by a temperature controller (not shown), like the doctor roll 122. This configuration stabilizes the viscosity of the main agent M.

The second unwinding unit 13 sends the second web W2 to the second coating unit 14. The second web W2 is rotatably attached to a web attachment section 131 of the second unwinding unit 13.

The second coating unit 14 applies, as a coating liquid, a curing agent H of the two-component curable solvent-free adhesive to the second web W2 sent from the second unwinding unit 13. As illustrated in Fig. 3, the second coating unit 14 is a gravure coating machine, which applies the curing agent H through gravure printing. The second coating unit 14 includes a gravure roll 141, a chamber 142, an impression cylinder 143, a coating liquid tank 144, a pump 145, and a temperature controller 146.

The gravure roll 141 is a metal roll that is rotatably supported by the second coating unit 14. The surface of the gravure roll 141 has multiple recesses (gravure pattern) formed by, for example, laser engraving. The amount of the coating liquid applied to the surface of the gravure roll 141 can be adjusted by changing, for example, the volume, opening ratio, depth of each recess. The gravure pattern formed on the surface of the gravure roll 141 is not limited. In this embodiment, a honeycomb pattern is used.

As illustrated in Fig. 3, the chamber 142 is a container that stores the curing agent H. The chamber 142 is disposed on one side of the gravure roll 141 in the radial direction.

As illustrated in Fig. 3, the chamber 142 includes a storage 142a for storing the curing agent H. The storage 142a is open to the gravure roll 141 side. Part of the outer circumferential surface of the gravure roll 141 is immersed in the curing agent H stored in the storage 142a.

The chamber 142 includes a doctor blade 142b having a plate shape. The doctor blade 142b extends toward the gravure roll 141 from an opening upper end portion of the storage 142a. The doctor blade 142b is made of any material and may be made of metal or resin. The doctor blade 142b according to this embodiment is made of stainless steel.

The edge of the doctor blade 142b is pressed against the outer circumferential surface of the gravure roll 141 and seals the storage 142a on the downstream side in the roll rotation direction. The amount of the curing agent H is measured by the doctor blade 142b scraping off excess curing agent H attached to the outer circumferential surface of the gravure roll 141 through the rotation movement of the gravure roll 141.

The chamber 142 includes a seal plate 142c having a plate shape. The seal plate 142c is made of resin and extends toward the gravure roll 141 from an opening lower end portion of the storage 142a.

The edge of the seal plate 142c is pressed against the outer circumferential surface of the gravure roll 141 and seals the storage 142a on the upstream side in the roll rotation direction.

The chamber 142 includes side plates 142d made of resin. The side plates 142d are attached to both side surfaces of the chamber 142, that is, attached to both end sections in the rotation axis direction of the gravure roll 141.

As illustrated in Fig. 3, the side surface of each side plate 142d on the gravure roll 141 side has an arc shape along the gravure roll 141 and is pressed against the gravure roll 141.

The doctor blade 142b, the seal plate 142c, and a pair of the side plates 142d seal the storage 142a.

The impression cylinder 143 holds the second web W2 together with the gravure roll 141 and transports the second web W2. The impression cylinder 143 presses the second web W2 against the gravure roll 141 and transfers the curing agent H on the outer circumferential surface of the gravure roll 141 to the second web W2.

The coating liquid tank 144 is a container that stores the curing agent H. As illustrated in Fig. 3, the coating liquid tank 144 is connected to the pump 145 through a pipe. The pump 145 causes the curing agent H to flow into the chamber 142. The coating liquid tank 144 is connected to the chamber 142 through a pipe. With this configuration, the curing agent H overflowing from the storage 142a of the chamber 142 is collected in the coating liquid tank 144.

The pump 145 is connected to the coating liquid tank 144 and the chamber 142 through pipes. The pump 145 causes the curing agent H stored in the coating liquid tank 144 to be supplied to the storage 142a of the chamber 142. The pump 145 is, for example, a sine pump.

The temperature controller 146 controls the temperature of the curing agent H stored in the coating liquid tank 144. The temperature controller 146 maintains the curing agent H at a constant temperature and stabilizes the viscosity of the curing agent H. The temperature controller 146 is, for example, a water temperature controller that heats water, which is a heating medium, with a heater and circulates water around the curing agent H stored in the coating liquid tank 144.

As illustrated in Fig. 1, the laminator 15 includes a bonding unit 151 and a winding unit 152. The bonding unit 151 bonds the first web W1 sent from the first coating unit 12 and the second web W2 sent from the second coating unit 14. The winding unit 152 winds the bonded webs up.

The bonding unit 151 bonds together the coating liquid-applied surface of the first web W1 sent from the first coating unit 12 and the coating liquid-applied surface of the second web W2 sent from the second coating unit 14. The two-component curable solvent-free adhesive starts to cure when the main agent M applied to the first web W1 is mixed with the curing agent H applied to the second web W2 in the bonding unit 151, whereby the first web W1 and the second web W2 are bonded together and fixed.

The winding unit 152 winds up a composite film formed by bonding the first web W1 to the second web W2 together in the bonding unit 151.

Next, a lamination method using the lamination apparatus 1 according to this embodiment will be described.

Once the operation of the lamination apparatus 1 starts, the first web W1 is sent from the first unwinding unit 11 to the first coating unit 12 which performs the first application step. In the first coating unit 12, the rolls start to rotate in the respective directions indicated by the arrows in Fig. 2.

As stated above, a fine gap is formed between the application roll 121 and the doctor roll 122, and the main agent M stored in the reservoir 120 is applied to the surface of the doctor roll 122 through the rotation of the application roll 121 and the doctor roll 122. The viscosity of the main agent M is higher than the viscosity of the curing agent H and is, for example, about 500 mPa·S.

Since the coating material stored in the reservoir 120 is only the main agent M, the curing of the two-component curable solvent-free adhesive does not start yet. The coating material stored in the reservoir 120 thus has long pot life, which can reduce the waste of the adhesive.

The main agent M applied to the doctor roll 122 is transferred to the metering roll 123 and the coating roll 124 in sequence. Any one of the rolls of the first coating unit 12 is designed to rotate at higher rotational speed than the previous roll. With this configuration, the coating thickness of the main agent M is controlled so as to decrease gradually and reach a predetermined coating thickness (coating amount) at the coating roll 124.

The main agent M that has been transferred to the coating roll 124 is transferred to the first web W1 which is transported between the coating roll 124 and the backing roll 125. The main agent M is applied to the first web W1 accordingly. The first coating unit 12 sends, to the laminator 15, the first web W1 to which the main agent M has been applied.

The second web W2 is sent from the second unwinding unit 13 to the second coating unit 14 which performs the second application step. In the second coating unit 14, the gravure roll 141 and the impression cylinder 143 start to rotate in the respective directions indicated by the arrows in Fig. 3.

By the rotation movement of the gravure roll 141, the curing agent H in the chamber 142 is applied to the surface of the gravure roll 141. The viscosity of the curing agent H is suitable for a gravure coating machine and lower than the viscosity of the main agent M. Specifically, the viscosity of the curing agent H is 10 mPa·S or more and 500 mPa·S or less. The viscosity of the curing agent H is preferably 50 mPa·S or more and 300 mPa·S or less, and more preferably 50 mPa·S or more and 200 mPa·S or less. The curing agent H applied to the gravure roll 141 is measured by scraping off the curing agent H with the doctor blade 142b of the chamber 142.

The volume and depth of the gravure pattern of the gravure roll 141 according to this embodiment are set to larger values in a central section than those in both end sections in the coating width direction of the curing agent H, that is, in the rotation axis direction of the gravure roll 141. Thus, the coating amount of the curing agent H in a central section in the coating width direction is larger than that in both end sections in the coating width direction.

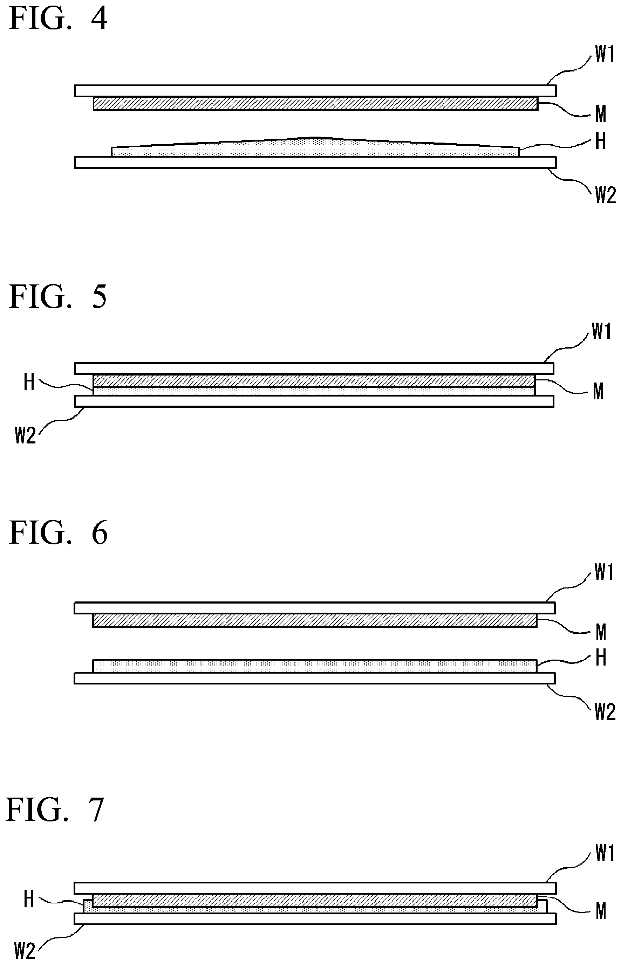

Accordingly, as illustrated in Fig. 4, the coating amount of the curing agent H transferred onto the second web W2 is larger in a central section in the coating width direction than in both end sections in the coating width direction.

The rotation direction of the gravure roll 141 may be either the forward rotation in the same direction as the transport direction of the second web W2 or the reverse rotation in the direction opposite to the transport direction of the second web W2. The rotation direction of the gravure roll 141 according to this embodiment is the reverse rotation. In other words, as illustrated in Fig. 3, the gravure roll 141 transfers the curing agent H onto the second web W2 while rotating in the direction opposite to the transport direction of the second web W2. Accordingly, the curing agent H applied to the second web W2 has good appearance without ribbing, gravure roll cell pattern, or the like.

The second coating unit 14 then sends, to the laminator 15 which performs the bonding step, the second web W2 to which the curing agent H has been applied.

The bonding unit 151 of the laminator 15 bonds the first web W1 and the second web W2 together such that the coating liquid-applied surface of the first web W1 sent from the first coating unit 12 is in contact with the coating liquid-applied surface of the second web W2 sent from the second coating unit 14. The main agent M applied to the first web W1 is mixed with the curing agent H applied to the second web W2 accordingly, and the two-component curable solvent-free adhesive starts to cure.

In this embodiment, as illustrated in Fig. 4, the amount of the curing agent H applied to the second web W2 is large in a central section in the coating width direction. The coating width of the curing agent H is set to a narrower coating width than that of the main agent M. Since the main agent M has higher viscosity than the curing agent H, as illustrated in the cross-sectional view of the bonded webs in Fig. 5, the curing agent H is pushed aside by the main agent M and spreads in the coating width direction. Accordingly, the main agent M and the curing agent H can be uniformly mixed in the coating width direction.

Fig. 6 illustrates an example in which the coating amount of the curing agent H in the coating width direction is uniform, and the coating width of the main agent M is equal to that of the curing agent H. In this case, as illustrated in Fig. 7, the curing agent H having low viscosity is pushed aside by the main agent M having high viscosity when the first web W1 and the second web W2 are bonded together. The curing agent H protrudes from both end sections in the coating width direction, which causes curing defects. In the above embodiments (Fig. 4, Fig. 5), such defects can be prevented.

The coating weight ratio of the main agent M, which is a coating liquid applied by the first coating unit 12, to the curing agent H, which is a coating liquid applied by the second coating unit 14, is set, for example, as described below.

The coating amount of the coating liquid that can be stably applied by the first coating unit 12, which is a roll coater, is about 0.5 to 5.0 µm, and typically in the range of 1.2 to 4.0 µm. The coating amount of the adhesive in lamination of films used in food packaging materials and the like is normally 1.2 to 2.5 µm, and is mainly set in the range of 1.3 to 2.0 µm. The coating amount ratio of the main agent M to the curing agent H in a two-component curable adhesive used in application of food packaging materials is preferably close to 1:1. At this ratio, the second coating unit 14, which is a gravure coating machine, can stably apply the coating liquid in a low coating amount range. Thus, the coating amount of the main agent M applied by the first coating unit 12 is set to an amount close to the lower limit in a coating amount range in which the coating liquid can be applied stably.

However, when the coating amount ratio of the main agent M to the curing agent H is 1:1, the curing agent H having low viscosity protrudes from both end sections in the coating width direction, as described above. From this circumstance, in this embodiment, the coating weight ratio of the coating liquid applied by the first coating unit 12 to the coating liquid applied by the second coating unit 14 is set in the range of 1:1 to 10:1. Accordingly, the coating amount in the first coating unit 12, which is a roll coater, is set in a range in which the coating liquid can be applied stably, while the coating amount of the curing agent H having low viscosity applied by the second coating unit 14 is set to a small value, thereby preventing the curing agent H from protruding from both end sections.

A composite film produced by bonding the first web W1 and the second web W2 together in the bonding unit 151 is transported to the winding unit 152. The winding unit 152 winds the composite film up.

As described above, the lamination apparatus 1 according to this embodiment causes the first web W1 and the second web W2 to adhere to each other by respectively applying the main agent M and the curing agent H of the two-component curable solvent-free adhesive to the first web W1 and the second web W2 and bonding these webs together to start curing of the adhesive. Thus, a fast-curing two-component curable adhesive can be used without the restriction on the pot life of coating materials. Therefore, the quality of the composite film can be improved by curing the adhesive readily after bonding to suppress positional deviation after bonding.

In this embodiment, the second coating unit 14 which applies the curing agent H having low viscosity to the second web W2 is a gravure coating machine. The coating quality can thus be improved by preventing liquid sagging even when a coating liquid that has low viscosity and causes defects such as liquid sagging in a roll coater is used. In addition, the lamination apparatus 1 can be downsized by simplifying the structure of the second coating unit 14.

In this embodiment, the first coating unit 12 which applies the main agent M having high viscosity to the first web W1 is a roll coater. The main agent M having high viscosity can thus be applied without clogging of the roll.

In the embodiment, the main agent M having high viscosity is applied by the first coating unit 12, which is a roll coater, and the curing agent H having low viscosity is applied by the second coating unit 14, which is a gravure coating machine. However, the present invention is not limited to this configuration. When the curing agent H has higher viscosity than the main agent M, the curing agent H may be applied by the first coating unit 12, and the main agent M may be applied by the second coating unit 14, which is a gravure coating machine. The coating quality can thus be improved by preventing liquid sagging during application of the main agent M having low viscosity.

In the embodiment, the first coating unit 12 is a roll coater, but the first coating unit 12 is not limited to a roll coater. For example, when the coating liquid applied by the first coating unit 12 has low viscosity, the first coating unit 12 may be a gravure coating machine. Accordingly, defects such as liquid sagging can be prevented. In addition, the lamination apparatus 1 can be generally downsized by simplifying the structure of the first coating unit 12.

In the embodiment, the viscosity of the coating liquid applied by the first coating unit 12 is higher than the viscosity of the coating liquid applied by the second coating unit 14, but the present invention is not limited to this feature. The viscosity of the coating liquid applied by the first coating unit 12 may be lower than the viscosity of the coating liquid applied by the second coating unit 14. In this case, for example, the use of a gravure coating machine as the first coating unit 12, as described above, can prevent liquid sagging in both the first coating unit 12 and the second coating unit 14.

In the second coating unit 14 according to the embodiment, only the temperature of the curing agent H stored in the coating liquid tank 144 is controlled by the temperature controller 146, but the present invention is not limited to this feature. For example, the temperature of the curing agent H stored in the storage 142a of the chamber 142 may be controlled. Alternatively, the temperature of the gravure roll 141 may be controlled. The coating quality can thus be improved by stabilizing the viscosity of the curing agent H during coating.

In the embodiment, the laminator 15 is disposed between the first coating unit 12 and the second coating unit 14, but the present invention is not limited to this configuration. For example, the second coating unit 14 may be disposed between the first coating unit 12 and the laminator 15. Alternatively, the first coating unit 12 and the second coating unit 14 may be exchanged with each other. The lamination apparatus 1 can be thus downsized by optimizing the layout of the units accordingly. In addition, the contamination of the bonding face with foreign matter can be prevented by laying out the first web W1 and the second web W2 such that the coating liquid-applied surface of the first web W1 or the coating liquid-applied surface of the second web W2 faces downward.

### (Rotational Speed of Gravure Roll)

As described above, the rotation direction of the gravure roll 141 according to this embodiment may be either the forward rotation in the same direction as the transport direction of the second web W2 or the reverse rotation in the direction opposite to the transport direction of the second web W2. The proper rotational speed of the gravure roll 141 will be described below.

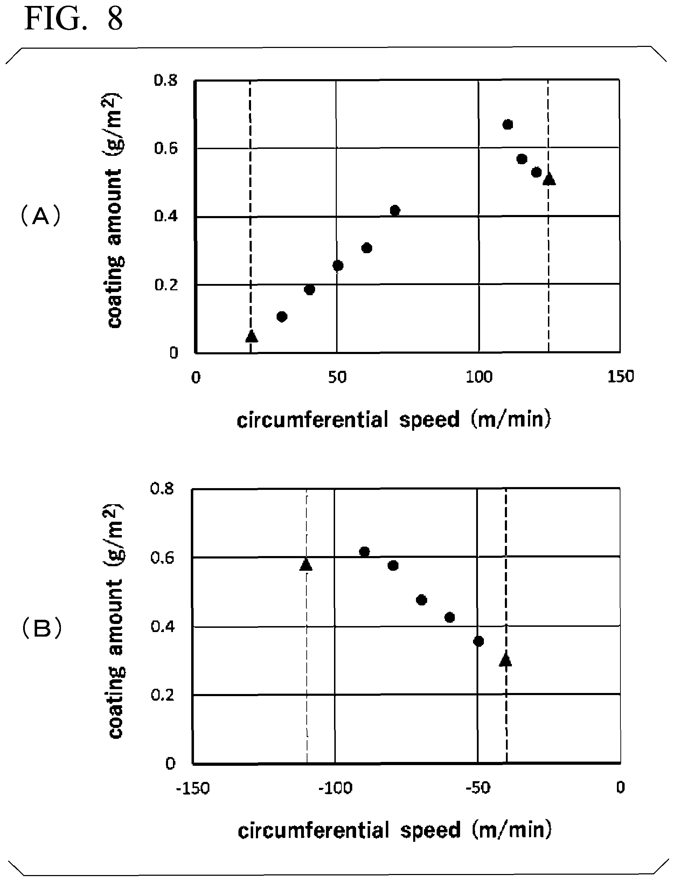

Figs. 8(A) and 8(B) show graphs of examples of the coating amount of the coating liquid as a function of gravure circumferential speed, which is the rotational speed of the gravure roll 141, when the line speed, that is, the feed speed of the second web W2, is 80 m/min. The material of the second web W2 according to these examples is a PET (polyethylene terephthalate) film having a thickness of 12 µm.

The horizontal axis of the graphs in Figs. 8(A) and 8(B) represents the gravure circumferential speed, where the negative circumferential speed shows reverse rotation, and the positive circumferential speed shows forward rotation. The vertical axis of the graphs in Figs. 8(A) and 8(B) represents the coating amount of the coating liquid. In the reverse rotation of the gravure roll 141 shown in Fig. 8(B), the coating amount of the coating liquid increases as the rotational speed in the reverse rotation direction increases. However, at a gravure circumferential speed of - 110 m/min, the behavior of the second web W2 becomes unstable, and the coating amount decreases.

The coating amount of the coating liquid decreases as the rotational speed in the reverse rotation direction decreases. At a gravure circumferential speed of -40 m/min, a defect caused by missing coating occurs. Therefore, the proper speed range for the reverse rotation in this example is a range of higher than -100 m/min and lower than -40 m/min.

In the forward rotation of the gravure roll 141 shown in Fig. 8(A), the coating amount of the coating liquid increases as the rotational speed in the forward rotation direction increases. However, at a gravure circumferential speed of +125 m/min, the behavior of the second web W2 becomes unstable.

The coating amount of the coating liquid decreases as the rotational speed in the forward rotation direction decreases. At a gravure circumferential speed of +20 m/min, a defect caused by a shortage of coating amount occurs. Therefore, the proper speed range for the forward rotation in this example is a range of higher than +20 m/min and lower than +125 m/min.

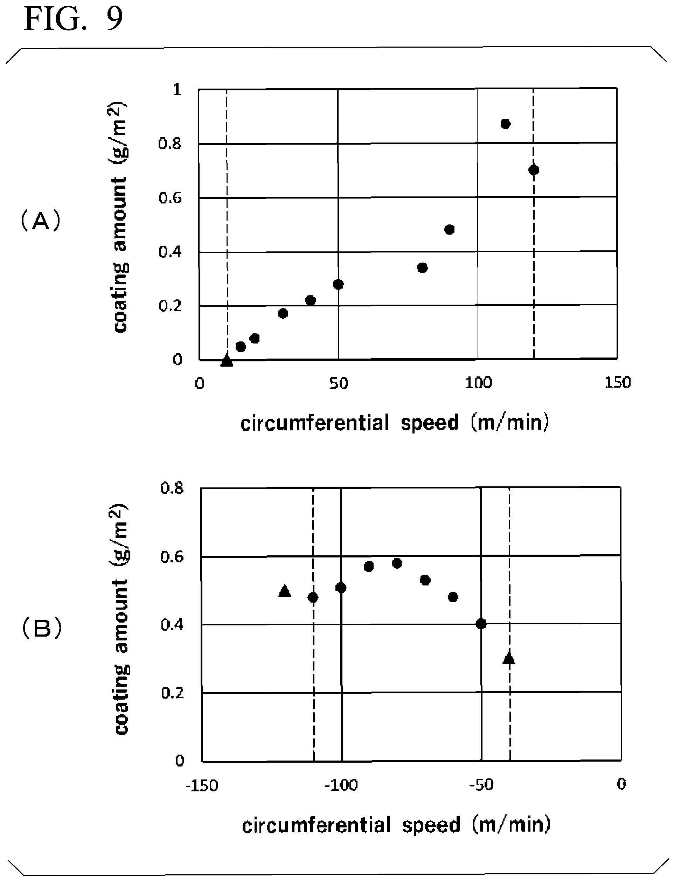

Figs. 9(A) and 9(B) show graphs of examples of the coating amount of the coating liquid as a function of gravure circumferential speed, which is the rotational speed of the gravure roll 141, when the line speed, that is, the feed speed of the second web W2, is 100 m/min. The material of the second web W2 according to these examples is a PET film having a thickness of 12 µm.

The horizontal axis of the graphs in Figs. 9(A) and 9(B) represents the gravure circumferential speed, where the negative circumferential speed shows reverse rotation, and the positive circumferential speed shows forward rotation. The vertical axis of the graphs in Figs. 9(A) and 9(B) represents the coating amount of the coating liquid. In the reverse rotation of the gravure roll 141 shown in Fig. 9(B), the coating amount of the coating liquid increases as the rotational speed in the reverse rotation direction increases. However, the coating amount decreases as the gravure circumferential speed exceeds -80 m/min, and the behavior of the second web W2 becomes unstable at a gravure circumferential speed of -120 m/min.

The coating amount of the coating liquid decreases as the rotational speed in the reverse rotation direction decreases. At a gravure circumferential speed of -40 m/min, a defect caused by missing coating occurs. Therefore, the proper speed range for the reverse rotation in this example is a range of higher than -110 m/min and lower than -40 m/min.

In the forward rotation of the gravure roll 141 shown in Fig. 9(A), the coating amount of the coating liquid increases as the rotational speed in the forward rotation direction increases. However, at a gravure circumferential speed of +130 m/min, the behavior of the second web W2 becomes unstable.

The coating amount of the coating liquid decreases as the rotational speed in the forward rotation direction decreases. At a gravure circumferential speed of +10 m/min, a defect caused by a shortage of coating amount occurs. Therefore, the proper speed range for the forward rotation in this example is a range of higher than +10 m/min and lower than +120 m/min.

As described above, the rotation direction of the gravure roll 141 may be either forward rotation or reverse rotation, but the proper speed range in forward rotation is wider than that in reverse rotation. Therefore, when the rotation direction of the gravure roll 141 is forward rotation in the same direction as the transport direction of the second web W2, it is easy to control the rotational speed of the gravure roll 141, that is, gravure circumferential speed.

### Reference Signs List

1 Lamination apparatus, 11 First unwinding unit, 12 First coating unit, 120 Reservoir, 121 Application roll, 122 Doctor roll, 123 Metering roll, 124 Coating roll, 125 Backing roll, 126 Weir plate, 13 Second unwinding unit, 111, 131 Web attachment section, 14 Second coating unit, 141 Gravure roll, 142 Chamber, 142a Storage, 142b Doctor blade, 142c Seal plate, 142d Side plate, 143 Impression cylinder, 144 Coating liquid tank, 145 Pump, 146 Temperature controller, 15 Laminator, 151 Bonding unit, 152 Winding unit, M Main agent, H Curing agent, W1 First web, W2 Second web

## Claims

1. A lamination apparatus (1) comprising:
a first coating unit (12) that applies, as a first coating liquid, one of a main agent (M) and a curing agent (H) of a two-component curable adhesive to a first web (Wl);
a second coating unit (14) that applies, as a second coating liquid, the other one of the main agent (M) and the curing agent (H) of the two-component curable adhesive to a second web (W2), the other one being the one not applied to the first web (Wl); and
a bonding unit that bonds a coating liquid-applied surface of the first web (W1) and a coating liquid-applied surface of the second web (W2) together,
wherein the first coating unit (12) includes a reservoir (120), an application roll (121), a doctor roll (122), a metering roll (123), a coating roll (124), and a backing roll (125), wherein the coating roll (124) applies the first coating liquid to the first web (W1), and the metering roll (123) transfers the first coating liquid, which has been applied from the reservoir (120) to the doctor roll (122), to the coating roll (124),
the second coating unit (14) is a gravure coating machine, and
a feed speed of the second web (W2) in the gravure coating machine being the second coating unit (14) can be set in a range of 80 to 100 m/min.

2. The lamination apparatus (1) according to Claim 1, wherein the gravure coating machine being the second coating unit (14) includes
a gravure roll (141) that transfers the second coating liquid and that can be rotated in the same direction as a transport direction of the second web (W2).

3. The lamination apparatus (1) according to Claim 1, wherein the gravure coating machine being the second coating unit (14) includes
a gravure roll (141) that transfers the second coating liquid and that can be rotated in a direction opposite to a transport direction of the second web (W2).

4. The lamination apparatus (1) according to Claim 1, wherein a coating weight ratio of the first coating liquid applied by the first coating unit (12) to the second coating liquid applied by the second coating unit (14) is in a range of 1:1 to 10: 1.

5. The lamination apparatus (1) according to Claim 1 or 2, wherein the second coating unit (14) includes:
a coating liquid tank (144) that stores the second coating liquid; and
a temperature controller (146) that controls a temperature of the second coating liquid stored in the coating liquid tank (144).

6. The lamination apparatus (1) according to any one of Claims 1 to 4, wherein the second coating unit (14)
applies the second coating liquid in such a manner that a coating amount of the second coating liquid in a central section in a coating width direction is larger than a coating amount of the second coating liquid in both end sections in the coating width direction.

7. A lamination method comprising:
a step of transferring, as a first coating liquid, one of a main agent (M) and a curing agent (H) of a two-component curable adhesive from a reservoir (120) to a metering roll (123),
a step of transferring the first coating liquid from the metering roll (123) to a coating roll (124),
a first application step of applying the first coating liquid from the coating roll (124) to a first web (Wl);
a second application step of applying, as a second coating liquid, the other one of the main agent (M) and the curing agent (H) of the two-component curable adhesive to a second web (W2) through gravure printing, the other one being the one not applied to the first web (Wl); and
a bonding step of bonding a coating liquid-applied surface of the first web (W1) and a second coating liquid-applied surface of the second web (W2) together,
wherein in the second application step,
a feed speed of the second web (W2) is in a range of 80 m/min or higher.

8. The lamination method according to Claim 7, wherein the second application step involves
applying the second coating liquid to the second web (W2) by rotating a gravure roll (141) in the same direction as a transport direction of the second web (W2).

9. The lamination method according to Claim 7 or 8, wherein a coating weight ratio of the first coating liquid applied in the first application step to the second coating liquid applied in the second application step is in a range of 1:1 to 10:1.

10. The lamination method according to any one of claims 7 to 9, wherein the second coating liquid applied in the second application step has a viscosity of
10 mPa·S or more and 500 mPa·S or less.

## Patentansprüche

1. Laminiervorrichtung (1), umfassend:
eine erste Beschichtungseinheit (12), die als eine erste Beschichtungsflüssigkeit eines von einem Hauptmittel (M) und einem Aushärtungsmittel (H) eines härtbaren Zweikomponenten-Klebstoffs auf eine erste Bahn (W1) aufträgt,
eine zweite Beschichtungseinheit (14), die als eine zweite Beschichtungsflüssigkeit das andere des Hauptmittels (M) und des Aushärtungsmittels (H) des härtbaren Zweikomponenten-Klebstoffs auf eine zweite Bahn (W2) aufträgt, wobei das andere dasjenige ist, das nicht auf die erste Bahn (W1) aufgetragen wurde; und
eine Verbindungseinheit, die eine mit Beschichtungsflüssigkeit versehene Oberfläche der ersten Bahn (W1) und eine mit Beschichtungsflüssigkeit versehene Oberfläche der zweiten Bahn (W2) miteinander verbindet,
wobei die erste Beschichtungseinheit (12) einen Vorratsbehälter (120), eine Auftragswalze (121), eine Rakelwalze (122), eine Dosierwalze (123), eine Beschichtungswalze (124) und eine Stützwalze (125) aufweist, wobei die Beschichtungswalze (124) die erste Beschichtungsflüssigkeit auf die erste Bahn (W1) aufträgt und die Dosierwalze (123) die erste Beschichtungsflüssigkeit, die von dem Vorratsbehälter (120) auf die Rakelwalze (122) aufgetragen wurde, zu der Beschichtungswalze (124) überträgt,
die zweite Beschichtungseinheit (14) eine Tiefdruck-Beschichtungsmaschine ist, und
eine Vorschubgeschwindigkeit der zweiten Bahn (W2) in der Tiefdruck-Beschichtungsmaschine, die die zweite Beschichtungseinheit (14) ist, in einem Bereich von 80 bis 100 m/min eingestellt werden kann.

2. Laminiervorrichtung (1) nach Anspruch 1, wobei die Tiefdruck-Beschichtungsmaschine, die die zweite Beschichtungseinheit (14) ist, umfasst:
eine Tiefdruckwalze (141), die die zweite Beschichtungsflüssigkeit überträgt und die in der gleichen Richtung wie eine Transportrichtung der zweiten Bahn (W2) gedreht werden kann.

3. Laminiervorrichtung (1) nach Anspruch 1, wobei die Tiefdruck-Beschichtungsmaschine, die die zweite Beschichtungseinheit (14) ist, umfasst:
eine Tiefdruckwalze (141), die die zweite Beschichtungsflüssigkeit überträgt und die in einer Richtung entgegengesetzt zu einer Transportrichtung der zweiten Bahn (W2) gedreht werden kann.

4. Laminiervorrichtung (1) nach Anspruch 1, wobei ein Beschichtungsgewichtsverhältnis der von der ersten Beschichtungseinheit (12) aufgebrachten ersten Beschichtungsflüssigkeit zu der von der zweiten Beschichtungseinheit (14) aufgebrachten zweiten Beschichtungsflüssigkeit in einem Bereich von 1:1 bis 10:1 liegt.

5. Laminiervorrichtung (1) nach Anspruch 1 oder 2, wobei die zweite Beschichtungseinheit (14) umfasst:
einen Beschichtungsflüssigkeitstank (144), der die zweite Beschichtungsflüssigkeit speichert; und
einen Temperaturregler (146), der eine Temperatur der in dem Beschichtungsflüssigkeitstank (144) gespeicherten zweiten Beschichtungsflüssigkeit regelt.

6. Laminiervorrichtung (1) nach einem der Ansprüche 1 bis 4, wobei die zweite Beschichtungseinheit (14)
die zweite Beschichtungsflüssigkeit so aufträgt, dass eine Beschichtungsmenge der zweiten Beschichtungsflüssigkeit in einem mittleren Abschnitt in einer Beschichtungsbreitenrichtung größer ist als eine Beschichtungsmenge der zweiten Beschichtungsflüssigkeit in beiden Endabschnitten in der Beschichtungsbreitenrichtung.

7. Laminierungsverfahren, umfassend:
einen Schritt des Übertragens, als eine erste Beschichtungsflüssigkeit, eines von einem Hauptmittel (M) und einem Aushärtungsmittel (H) eines härtbaren Zweikomponenten-Klebstoffs von einem Vorratsbehälter (120) zu einer Dosierwalze (123),
einen Schritt des Übertragens der ersten Beschichtungsflüssigkeit von der Dosierwalze (123) auf eine Beschichtungswalze (124),
einen ersten Auftragsschritt des Auftragens der ersten Beschichtungsflüssigkeit von der Beschichtungswalze (124) auf eine erste Bahn (W1),
einen zweiten Auftragsschritt des Auftragens, als eine zweite Beschichtungsflüssigkeit, des anderen des Hauptmittels (M) und des Aushärtungsmittels (H) des härtbaren Zweikomponenten-Klebstoffs auf eine zweite Bahn (W2) durch Tiefdruck, wobei das andere dasjenige ist, das nicht auf die erste Bahn (W1) aufgetragen wurde; und
einen Verbindungsschritt des Verbindens einer mit Beschichtungsflüssigkeit versehenen Oberfläche der ersten Bahn (W1) und einer mit zweiter Beschichtungsflüssigkeit versehenen Oberfläche der zweiten Bahn (W2) miteinander,
wobei in dem zweiten Auftragsschritt,
eine Vorschubgeschwindigkeit der zweiten Bahn (W2) in einem Bereich von 80 m/min oder höher liegt.

8. Laminierungsverfahren nach Anspruch 7, wobei der zweite Auftragsschritt folgendes umfasst:
Auftragen der zweiten Beschichtungsflüssigkeit auf die zweite Bahn (W2) durch Drehen einer Tiefdruckwalze (141) in der gleichen Richtung wie eine Transportrichtung der zweiten Bahn (W2).

9. Laminierungsverfahren nach Anspruch 7 oder 8, wobei ein Beschichtungsgewichtsverhältnis der im ersten Auftragsschritt aufgetragenen ersten Beschichtungsflüssigkeit zu der im zweiten Auftragsschritt aufgetragenen zweiten Beschichtungsflüssigkeit in einem Bereich von 1:1 bis 10: 1 liegt.

10. Laminierungsverfahren nach einem der Ansprüche 7 bis 9, wobei die im zweiten Auftragsschritt aufgetragene zweite Beschichtungsflüssigkeit eine Viskosität von
10 mPa-S oder mehr und 500 mPa-S oder weniger aufweist.

## Revendications

1. Appareil de stratification (1) comprenant :
une première unité de revêtement (12) qui applique, en guise de premier liquide de revêtement, l'un parmi un agent principal (M) et un agent de durcissement (H) d'un adhésif durcissable à deux composants à une première bande (W1) ;
une seconde unité de revêtement (14) qui applique, en guise de second liquide de revêtement, l'autre parmi l'agent principal (M) et l'agent de durcissement (H) de l'adhésif durcissable à deux composants sur une seconde bande (W2), l'autre étant celui qui n'est pas appliqué à la première bande (W1) ; et
une unité de liaison qui lie une surface à liquide de revêtement appliqué de la première bande (W1) et une surface à liquide de revêtement appliqué de la seconde bande (W2) ensemble,
dans lequel la première unité de revêtement (12) comporte un réservoir (120), un rouleau d'application (121), un rouleau racle (122), un rouleau doseur (123), un rouleau de revêtement (124) et un contre-rouleau (125), dans lequel le rouleau de revêtement (124) applique le premier liquide de revêtement à la première bande (W1), et le rouleau doseur (123) transfère le premier liquide de revêtement, qui a été appliqué du réservoir (120) au rouleau racle (122), au rouleau de revêtement (124),
la seconde unité de revêtement (14) est une machine de revêtement par gravure, et
une vitesse d'avance de la seconde bande (W2) dans la machine de revêtement par gravure qui est la seconde unité de revêtement (14) peut être réglée dans une plage de 80 à 100 m/min.

2. Appareil de stratification (1) selon la revendication 1, dans lequel la machine de revêtement par gravure qui est la seconde unité de revêtement (14) comporte
un rouleau de gravure (141) qui transfère le second liquide de revêtement et qui peut être mis en rotation dans la même direction que la direction de transport de la seconde bande (W2).

3. Appareil de stratification (1) selon la revendication 1, dans lequel la machine de revêtement par gravure qui est la seconde unité de revêtement (14) comporte
un rouleau de gravure (141) qui transfère le second liquide de revêtement et qui peut être mis en rotation dans une direction opposée à une direction de transport de la seconde bande (W2).

4. Appareil de stratification (1) selon la revendication 1, dans lequel un rapport de poids de revêtement du premier liquide de revêtement appliqué par la première unité de revêtement (12) au second liquide de revêtement appliqué par la seconde unité de revêtement (14) est dans une plage de 1:1 à 10:1.

5. Appareil de stratification (1) selon la revendication 1 ou 2, dans lequel la seconde unité de revêtement (14) comporte :
une cuve de liquide de revêtement (144) qui stocke le second liquide de revêtement ; et
un dispositif de commande de température (146) qui commande une température du second liquide de revêtement stocké dans la cuve de liquide de revêtement (144).

6. Appareil de stratification (1) selon l'une quelconque des revendications 1 à 4, dans lequel la seconde unité de revêtement (14)
applique le second liquide de revêtement d'une manière telle qu'une quantité de revêtement du second liquide de revêtement dans une section centrale dans une direction de largeur de revêtement est plus grande qu'une quantité de revêtement du second liquide de revêtement dans l'une et l'autre des sections d'extrémité dans la direction de largeur de revêtement.

7. Procédé de stratification comprenant :
une étape consistant à transférer, en guise de premier liquide de revêtement, l'un parmi un agent principal (M) et un agent de durcissement (H) d'un adhésif durcissable à deux composants à partir d'un réservoir (120) vers un rouleau doseur (123),
une étape consistant à transférer le premier liquide de revêtement à partir du rouleau doseur (123) vers un rouleau de revêtement (124),
une première étape d'application consistant à appliquer le premier liquide de revêtement provenant du rouleau de revêtement (124) à une première bande (W1) ;
une seconde étape d'application consistant à appliquer, en guise de second liquide de revêtement, l'autre parmi l'agent principal (M) et l'agent de durcissement (H) de l'adhésif durcissable à deux composants à une seconde bande (W2) par héliogravure, l'autre étant celui qui n'est pas appliqué à la première bande (W1) ; et
une étape de liaison consistant à lier une surface à liquide de revêtement appliqué de la première bande (W1) et une seconde surface à liquide de revêtement appliqué de la seconde bande (W2) ensemble,
dans lequel dans la seconde étape d'application,
une vitesse d'avance de la seconde bande (W2) est dans une plage de 80 m/min ou plus élevée.

8. Procédé de stratification selon la revendication 7, dans lequel la seconde étape d'application implique
l'application du second liquide de revêtement à la seconde bande (W2) en mettant en rotation un rouleau de gravure (141) dans la même direction qu'une direction de transport de la seconde bande (W2).

9. Procédé de stratification selon la revendication 7 ou 8, dans lequel un rapport de poids de revêtement du premier liquide de revêtement appliqué dans la première étape d'application au second liquide de revêtement appliqué dans la seconde étape d'application est dans une plage de 1:1 à 10:1.

10. Procédé de stratification selon l'une quelconque des revendications 7 à 9, dans lequel le second liquide de revêtement appliqué dans la seconde étape d'application a une viscosité de 10 mPa·s ou plus et de 500 mPa·s ou moins.
